(19) Europäisches Patentamt
European Patent Office
Office européen des brevets

(11) Veröffentlichungsnummer: **0 158 896**
**B1**

(12) # EUROPÄISCHE PATENTSCHRIFT

(45) Veröffentlichungstag der Patentschrift: **03.05.89**

(51) Int. Cl.⁴: **B 05 D 1/02**, C 02 F 1/52

(21) Anmeldenummer: **85103765.5**

(22) Anmeldetag: **28.03.85**

(54) **Verwendung von Cyanamid und Cyanamid-Derivaten in Mitteln zur Koagulierung von Lacken, Wachsen und Beschichtungsmitteln.**

(30) Priorität: **05.04.84 DE 3412763**

(43) Veröffentlichungstag der Anmeldung: **23.10.85 Patentblatt 85/43**

(45) Bekanntmachung des Hinweises auf die Patenterteilung: **03.05.89 Patentblatt 89/18**

(84) Benannte Vertragsstaaten: **AT BE CH DE FR GB IT LI NL SE**

(56) Entgegenhaltungen:
EP-A- 0 039 859
EP-A- 0 079 838
FR-A- 2 182 085
FR-A- 2 263 982
FR-A- 2 319 582
GB-A- 973 534
US-A- 4 045 377
US-A- 4 090 001
US-A- 4 220 456

CHEMICAL ABSTRACTS, Band 83, Nr. 12, 22. September 1975, Seite 338, Nr. 102800s, Columbus, Ohio, US; M. NAKAJIMA et al.: "Chemistry of dicyandiamide and its application as a coagulant" & KOGYO YOSUI 175, 197, 54-61
CHEMICAL ABSTRACTS, Band 82, Nr. 14, 7. April 1975,

(73) Patentinhaber: **Henkel Kommanditgesellschaft auf Aktien, Postfach 1100 Henkelstrasse 67, D-4000 Düsseldorf-Holthausen (DE)**

(72) Erfinder: **Geke, Jürgen, Dr., Stoffeler Damm 108, D-4000 Düsseldorf 1 (DE)**

(56) Entgegenhaltungen: (Fortsetzung)
Seite 32, Nr. 87057p, Columbus, Ohio, US; & JP - B - 74 116 200 (SHIN-ETSU CHEMICAL INDUSTRY CO., LTD.) 06-11-1974

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 158 896 B1

ACTORUM AG

## Beschreibung

Die Erfindung betrifft die Verwendung von Cyanamid und/oder Dicyandiamid und/oder Cyanamid-Salzen in Mitteln zur Koagulierung von Lacken, Wachsen und Beschichtungsmitteln, insbesondere zur Koagulierung von Zweikomponenten-Polyurethanlacken.

Bei der Aufbringung von Lacken, Wachsen oder ähnlichen, nicht wasserlösliche organische Substanzen enthaltenden Beschichtungsmaterialien, z.B. in der Automobilindustrie, gelingt es nicht, die Materialien restlos auf die zu beschichtenden Teile aufzubringen. Speziell bei der Lakkierung von Kraftfahrzeugen fällt in den Lackspritzkabinen sogenannter «Overspray» an, der mittels Wasser aus den Lackspritzkabinen entfernt und in ein sogenanntes Beruhigungsbecken gespült wird. Um einerseits die Funktion der wasserführenden Leitungs-, Düsen- und Berieselungssysteme durch z.B. klebende Lackpartikel nicht zu stören und andererseits das umlaufende Wasser von den aufgenommenen Inhaltsstoffen zu entsorgen, müssen zur Koagulierung der genannten Stoffe dem Wasser Chemikalien zugegeben werden. Dabei sollte die Entklebung der verspritzten und vom Wasser aufgenommenen Lackpartikel und deren Agglomeration zu einem austragungsfähigen Koagulat in einem Arbeitsgang erfolgen.

Je nach den technisch vorhandenen Anlagen wird entweder ein Lackkoagulierungsmittel verwendet, durch das das Lackkoagulat im Beruhigungsbecken flotiert, d.h. aufschwimmt, was ein Abschöpfen des Koagulats von der Wasseroberfläche ermöglicht, oder eines, durch das das Koagulat sedimentiert, wonach es mittels eines Kratzbandes vom Beckenboden abgeräumt wird.

Zur Koagulierung herkömmlicher, vor allem in der Automobilindustrie verwendeter Lacke stehen eine Reihe neutraler und alkalischer Produkte zur Verfügung. Um Koagulierung, d.h. Entklebung der Lackpartikel und deren Agglomeration zu einem austragungsfähigen Koagulat, zu erreichen, wurden dem umlaufenden Wasser bisher alkalische pulverförmige und alkalische flüssige Produkte sowie pulverförmige neutrale Produkte zugesetzt.

So werden in der GB-A-1 512 022 flockulierende, d.h. den Zusammenschluss von Teilchen unter Einwirkung intermolekular brückenbildender Makromoleküle bewirkende, Agentien beschrieben. Diese setzen sich zusammen aus als Klärmittel wirkenden anorganischen Metallsalzen wie Eisen(II)chlorid oder Aluminiumsulfat, und organischen kationischen Polymeren wie Polyvinylpyridin oder Polyaminen in wässriger Lösung.

Zusatzmittel zu Spülflüssigkeiten zur Koagulierung von Lack- und Grundiermitteln werden in der DE-A-15 17 409 offenbart. Sie enthalten wasserlösliche Alkali- und/oder Erdalkalimetallsalze, schwer wasserlösliche Hydroxide mehrwertiger Metalle, wie Magnesium, Eisen, Aluminium oder Chrom sowie aliphatische oder cycloaliphatische Amine. Lackentklebungs- und Sedimentationsmittel, die aliphatische Carbonsäuren mit 12 oder mehr C-Atomen oder deren Alkali-, Ammonium- oder Alkanolaminsalze sowie schaumdämpfend wirkende Stoffe enthalten, werden in der DE-B-23 47 068 beschrieben. Wässrige Lösungen zur Entaktivierung von Overspray, die Alkalien und organische Amine bzw. Alkanolamine mit Organylgruppen mit 2 bis 10 C-Atomen enthalten, werden in der DE-A-20 06 008 beschrieben. Alkanolamine, die zusammen mit Metallsalzen und Polyetherpolyaminen in wässriger Lösung zur Entklebung von Lackspray-Partikelchen und zur Reinigung der Umlaufwässer in Lackspritzkabinen enthalten sind, werden auch in der US-A-39 90 986 offenbart.

Für die in jüngerer Zeit in der Automobilindustrie verstärkt eingesetzten 2-Komponenten-Polyurethan-Lacke existieren bisher keine geeigneten Koagulierungsmittel. Bislang wurden Polyurethanlacke zusammen mit anderen üblichen Decklacken appliziert, so dass bei der Koagulation eines Oversprays dieses Lackgemisches die zur Zeit verfügbaren Koagulierungsmittel noch eine mehr oder weniger befriedigende Wirkung zeigten. Die Koagulierung von Lacken ausschliesslich auf Polyurethanbasis gelingt jedoch mit den bisher verwendeten neutralen und alkalischen Produkten nicht. Das Koagulat klebt, hängt an den Wänden an, und ein geregelter Austrag des Koagulats über die üblichen Systeme ist nicht möglich. Die schlechte Koagulation der Polyurethan-Lackreste führt nach einigen Stunden, je nach dem verwendeten Polyurethan-System, zu steinharten, selbst ausgehärteten Zusammenlagerungen von Polyurethan-Lack, die nicht bzw. nur sehr schwer entfernbar sind und die gesamte Entsorgungsanlage des Lackiersystems zum Stillstand bringen können.

Die bekannten neutralen und alkalischen Koagulierungsmittel weisen neben ihrer mangelhaften Verwendbarkeit für die Koagulation von Polyurethan-Lacken weitere Nachteile auch bei deren Verwendung zur Koagulation herkömmlicher Lacke auf: Sie benötigen eine relativ lange Zeit, um die Lackpartikelchen zu koagulieren und das zur Austragung überschüssiger Lacknebel verwendete Wasser vollständig zu entsorgen. In ungünstigen Fällen führt dies zur Ablagerung miteinander verklebender Lackteilchen in Rohrleitungssystemen direkt nach der Lackierkabine. Ausserdem enthalten die meisten bekannten Koagulationsmittel Substanzen, wie z.B. anorganische Anionen (Chlorid, Sulfat), die sich im Umlaufwasser anreichern und korrosiv gegenüber verschiedenen Anlagenteilen wirken. Da aus wassertechnischen Gründen eine Verlängerung der Standzeit der Entsorgungsbäder angestrebt wird, ist eine Verwendung sich schnell anreichernder, die Funktionsfähigkeit der Anlage aus verschiedenen Gründen beeinträchtigender Substanzen unerwünscht, da sie zu einem häufigen Badwechsel zwingt.

In Chemical Abstracts, Band 83 (1975), Nr. 12, Seite 338, Abstract 102 800s, wird die Verwendung eines Dicyandiamid-Polymeren als Koagulierungsmittel für Abwässer, die saure Farbstoffe enthalten, für Abwässer aus der Papierindustrie sowie für Abwässer, die Acryl-Emulsionen enthalten, beschrieben. Zusammen mit Aluminium- oder Eisen-Salzen ($Al_2(SO_4)_3$ oder $FeCl_3$) ergeben diese Polymere bessere Resultate.

Ferner ist aus der FR-A-2 319 582 ein Verfahren zur Reinigung industrieller Abwässer, welche Farbstoffe und/oder Pigmente enthalten, bekannt. Hierbei setzt man den Abwässern ein wasserlösliches Dicyandiamid/Formaldehyd-Kondensat und einen Elektrolyten zu und trennt das resultierende Koagulat vom Abwasser ab. Als Elektrolyt werden vorzugsweise wasserlösliche anorganische Salze, insbesondere Natriumsulfat, Aluminiumsulfat oder Eisen(III)-chlorid, eingesetzt.

In Römpps Chemie-Lexikon, 8. Auflage, Band 2 (1981), Seite 830, werden unter dem Stichwort «Cyanamid» die Eigenschaften und Verwendungsmöglichkeiten dieses Stoffes beschrieben. Unter anderem wird hier erwähnt, dass man Cyanamid auch als Herbizid einsetzt.

Demgegenüber ist es die Aufgabe der vorliegenden Erfindung, den vorstehend geschilderten Nachteilen abzuhelfen und eine problemlose Koagulierung von Lacken und anderen organischen Beschichtungsmitteln, insbesondere von Zweikomponenten-Polyurethanlacken, zu bewirken. Ferner ist es Aufgabe der Erfindung, eine lange Standzeit der Umlaufbäder sicherzustellen, ohne dass sich in diesen korrodierende oder in anderer Weise schädliche Verbindungen anreichern. Ausserdem sollte eine rasche und wirkungsvolle Koagulierung, die auch Verklebungen und Verstopfungen von Leitungen unmittelbar im Anschluss an die Lackierkabine verhindert, erreicht werden.

Dementsprechend betrifft die vorliegende Erfindung die Verwendung von

a) 1 bis 80 Gew.-% Cyanamid und/oder Dicyandiamid und/oder Cyanamid-Salzen

In Mitteln zur Koagulierung von Lacken, Wachsen und Beschichtungsmitteln, insbesondere zur Koagulierung von Zweikomponenten-Polyurethanlacken, die mindestens eine der nachfolgend genannten Komponenten enthalten:

b) 1 bis 95 Gew.-% Calcium- und/oder Magnesiumverbindungen,

c) 1 bis 20 Gew.-% Polyethylenimine und/oder deren protonierte oder alkylierte Derivate,

d) 1 bis 95 Gew.-% Natriumaluminiumschichtsilikate und/oder Kieselsäuren und/oder Holzmehl.

Eine äusserst wirksame Koagulierung von Lakken und anderen organischen Beschichtungsmitteln, insbesondere 2-Komponenten-Polyurethanlacken, gelingt überraschenderweise durch die erfindungsgemässe Verwendung einer Kombination, die Cyanamid, Dicyandiamid (1-Cyanoguanidin) oder Calciumcyanamid in wässriger Lösung bei pH-Werten zwischen 3 und 12, bevorzugt zwischen 6,5 und 8,5 enthält. Neben einer überraschend guten Entklebung der Lackpartikelchen und einer Agglomeration zu einem austragungsfähigen Koagulat, haben die genannten Cyanamide den Vorteil, dass sie sich in Wasser langsam und kontinuierlich rückstandsfrei zu $NH_3$ und $CO_2$ auflösen und daher das Umlaufwasser in keiner Weise belasten. Der entstehende Ammoniak ist in Lösung wie auch im Dampfschwadenraum wirksam als Korrosionsinhibitor für Anlagenteile aus Eisen und Stahl.

Die für die Koagulierung von Lacken und Beschichtungsmitteln verwendeten Kombinationen enthalten eines oder mehrere der genannten Cyanamide in einer Menge von 1 bis 80 Gew.-%, vorzugsweise von 5 bis 15 Gew.-%.

Die erfindungsgemäss verwendeten Polyethylenimine liegen entweder als solche vor oder sind durch Protonierung bzw. durch Alkylierung, in der Regel durch Methylierung, des Stickstoffs kationisch modifiziert, bzw. in die entsprechenden Ammoniumsalze überführt.

Der Modifizierungsgrad ist dabei unterschiedlich und hängt ab vom neutralen Ausgangspolymeren, von der entsprechenden Säure zur Protonierung oder von dem entsprechenden Alkylierungsreagens. Tertiäre Stickstoffatome werden nicht vollständig protoniert bzw. alkyliert. Es sind protonierte und/oder methylierte Polyethylenimine verwendbar, deren Molekulargewichte im Bereich von etwa $5 \times 10^4$ bis $5 \times 10^7$ D, vorzugsweise von $7{,}5 \times 10^4$ bis $5 \times 10^6$ D liegen. Die Koagulierungsmittel enthalten die genannten Polyethylenimine in einer Menge von 1 bis 20 Gew.-%, bevorzugt 1 bis 4 Gew.-%.

Da eine erhöhte Viskosität der Umlaufwässer zu einer Verschlechterung der Wirkung der eingesetzten Koagulierungsmittel führt oder sie gänzlich unwirksam macht, werden erfindungsgemäss Substanzen verwendet, die eine Viskositätserhöhung verhindern und somit von vornherein eine störungsfreie Koagulierung der Lackpartikelchen bei normaler Viskosität ermöglichen. Erfindungsgemäss werden den Mitteln deswegen Calciumverbindungen zugesetzt, die Überraschenderweise allein oder in synergistischer Weise mit den Polyethyleniminen die Regeneration und Aufrechterhaltung der gewünschten Viskosität bewirken. Dazu können wasserunlösliche Calciumverbindungen – beispielsweise Calciumcarbonat oder -phosphat eingesetzt werden, die die Wässer nicht mit korrodierenden Ionen belasten und deswegen den Forderungen einer Verlängerung der Standzeit in besonderer Weise entsprechen. Es sind jedoch auch ionische Verbindungen – beispielsweise Calciumnitrat oder -hydroxid – mit Erfolg einsetzbar. Bevorzugt werden nicht korrosive Calciumverbindungen, wie Calciumcarbonat oder -hydroxid, verwendet. Die Calciumverbindungen, die in einer Menge von 1 bis 95 Gew.-%, vorzugsweise von 30 bis 50 Gew.-% verwendet werden, können vollständig oder partiell durch entsprechende Magnesiumverbindungen substituiert werden, was bei der Koagulation bestimmter Lacktypen vorteilhaft ist.

Zur Unterstützung der Koagulationswirkung werden erfindungsgemäss insbesondere dann, wenn Oversprays lösungsmittelhaltiger Lacksysteme koaguliert werden sollen, Natriumaluminium-Schichtsilikate, wie z.B. Montmorillonit oder Bentonit, und/oder Holzmehl und/oder Kieselsäuren, beispielsweise Kieselsäuren vom Typ Ultrasil[R] oder Aerosil[R] (Firma DEGUSSA AG, Frankfurt), verwendet. Die in den Koagulierungsmitteln enthaltenen Mengen liegen zwischen 1 und 95 Gew.-% vorzugsweise zwischen 10 und 30 Gew.-%.

Speziellen Anforderungen, wie z.B. der Einstellung eines bestimmten pH-Wertes oder der antimikrobiellen Aursrüstung der Koagulierungsmittel, kann dadurch Rechnung getragen werden, dass die Mittel spezielle Zusätze enthalten. So können gegebenenfalls Borsäure, die antimikrobielle Wirkung besitzt und gegebenenfalls auch zur pH-Wert-Einstellung beitragen kann, sowie Biozide, z.B. Formaldehyd, Isothiazoline und deren Derivate sowie Pyridin-N-oxid und dessen Derivate, verwendet werden. Zur pH-Wert-Einstellung dienen gegebenenfalls auch Phosphorsäure, organische Säuren wie Zitronensäure oder andere, nichtkorrosive Säuren bzw. deren saure Salze, die in einer Menge von 1 bis 40 Gew.-% bevorzugt in einer Menge von 5 bis 25 Gew.-% verwendet werden.

Als weitere mögliche Bestandteile der Koagulierungsmittel kommen auch Korrosionsinhibitoren und Antischaummittel infrage. Als Korrosionsinhibitoren werden wasserlösliche Salze von Phosphonsäuren und Zinksalze, bevorzugt das Natriumsalz der 2-Phosphonobutan-1,2,4-tricarbonsäure oder das Zinksalz des 2-Pyridinthiol-1-oxids verwendet. Als Antischaummittel hat sich neben für diesen Zweck aus dem Stand der Technik bekannten Mitteln das Produkt Dehydran[R] F (Firma Henkel) bewährt.

Die erfindungsgemäss zu verwendenden Koagulierungsmittel sind geeignet zur Koagulation aller üblichen Lacktypen und organischen Beschichtungsmittel (Wachse, Unterbodenschutz). Insbesondere eignen sie sich zur Koagulation von 2-Komponenten-Polyurethanlacken im pH-Bereich von 3 bis 12, bevorzugt von 6,5 bis 8,5. In allen Fällen tritt eine sehr rasche Koagulationswirkung ein, d.h. die im Umlaufwasser mitgeführten Lackpartikel werden sehr schnell entklebt, ohne dass sie an den anlagentechnischen Einrichtungen ankleben. Es werden lockere, überwiegend sandartige Koagulatpartikel gebildet, die durch die Strömung des Umlaufwassers rasch weitertransportiert werden, ohne die Leitungen zu verstopfen.

Die Mittel können ein Aufschwimmen oder auch eine Sedimentation der Koagulatpartikel in den Beruhigungsbecken bewirken.

Sollte ein spezieller Anlagentyp die Sedimentation des Koagulates erfordern, so können erfindungsgemäss Mischformale oder Mischether verwendet werden, die gegenüber bekannten, für diesen Zweck eingesetzten nichtionischen Tensiden den Vorteil haben, bei den Temperaturen des Koagulierungsprozesses (10 bis 30 °C) nicht zur Ausbildung von Schaum zu führen. Mischformale (z.B. gemäss DE-A-30 18 135) haben die allgemeine Formel $R^1$–O–$(AO)_m$–$CH_2$–$(OB)_n$–$OR^2$; Mischether (gemäss der genannten DE-A) haben die allgemeine Formel $R^3$–O–$(AO)_p$–$R^4$, in denen die Reste $R^1$ und $R^2$ Alkylreste von Fettalkoholen mit 4 bis 16 C-Atomen, die Reste $R^3$ und $R^4$ Alkylreste von Fettalkoholen mit 4 bis 14 C-Atomen, von Ethylendiamin oder Polyglycerinen, A und B Ethylen- oder Isopropylen-Reste und m und n ganze Zahlen von 1 bis 4 sowie p eine ganze Zahl von 6 bis 30 bedeuten. Die Koagulationsmittel im Sinne der Erfindung enthalten gegebenenfalls derartige Mischformale oder Mischether in einer Menge von 1 bis 15 Gew.-%, vorzugsweise von 2 bis 5 Gew.-%.

Soll jedoch ein Aufschwimmen der Koagulatpartikel in den Reinigungsbecken bewirkt werden, so werden erfindungsgemäss Silicate und/oder Phosphate in einer Menge von 1 bis 30 Gew.-%, bevorzugt von 3 bis 10 Gew.-%, verwendet. Als Silicate werden für diesen Zweck beispielsweise Wassergläser oder lösliche oder unlösliche Salze an Orthokieselsäure und deren Kondensationsprodukten bzw. deren dehydratisierten Derivaten (Metakieselsäuren) eingesetzt; als Phosphate finden lösliche oder unlösliche Salze von Orthopohosphorsäure und deren Kondensationsprodukten bzw. deren dehydratisierten Derivaten Verwendung.

Die Herstellung der erfindungsgemäss zu verwendenden Lackkoagulierungsmittel erfolgt durch Vermischen der entsprechenden Wirkstoffe in den angegebenen Mengenverhältnissen. Diese Mischungen können dann zu gegebener Zeit bzw. am Einsatzort durch einfaches Lösen bzw. Suspendieren in der jeweiligen Menge Wasser in die gewünschte flüssige Konzentratform bzw. Suspension gebracht und so dem Umlaufwasser zugesetzt werden. Die Zugabe erfolgt zweckmässig an einer Stelle mit kräftiger Turbulenz des Umlaufwassers bei laufender Pumpe, um eine schnelle Verteilung zu gewährleisten.

Die Dosierung der erfindungsgemäss zu verwendenden Koagulierungsmittel erfolgt entweder kontinuierlich mittels geeigneter Dosiergeräte oder diskontinuierlich, z.B. einmal pro Tag. Dabei werden dem Umlaufwasser die erfindungsgemässen Koagulierungsmittel in einer solchen Menge zugesetzt, dass der Gesamtgehalt aller Komponenten 1 bis 50 ppm pro Stunde Betriebszeit der Anlage beträgt. Dies entspricht einer Menge von 1 bis 50 g pro $m^3$ des in der Anlage enthaltenen Umlaufwassers.

Die Erfindung wird durch die nachstehenden Beispiele näher erläutert.

Rezepturen der erfindungsgemäss zu verwendenden pulverförmigen Koagulierungsmittel sind die folgenden, wobei sich die Angaben als Gewichtsprozente verstehen:

| Beispiele | | |
|---|---|---|
| 1. | 8% | Cyanamid |
| | 32% | Calciumcarbonat |
| | 28% | Calciumphosphat |
| | 20% | Holzmehl |
| | 10% | Bentonit |
| | 2% | protoniertes Polyethylenimin |

(MG: ca. $2 \cdot 10^5$ D), in Form einer 50%igen wässrigen Lösung (Super Floc® C 577, Firma American Cyanamid Co., New York)

2.
| | | |
|---|---|---|
| 10% | Dicyandiamid |
| 11% | Calciumhydroxid |
| 48% | Calciumcarbonat |
| 18% | Bentonit |
| 3% | protoniertes Polyethylenimin (MG: ca. $2 \cdot 10^5$ D), in Form einer 50%igen wässrigen Lösung (Super Floc® C 577, Firma American Cyanamid Co., New York) |
| 7% | Borsäure |
| 3% | Butylglykolformal der Formel $C_{12-14}H_{25-29}-O-(CH_2CH_2O)_4-CH_2-(OCH_2CH_2)-OC_4H_9$ |

3.
| | |
|---|---|
| 13% | Calciumcyanamid |
| 20% | Calciumcarbonat |
| 14% | Calciumoxid |
| 18% | Magnesiumcarbonat |
| 12% | Kieselsäure (Aerosil®, Firma DEGUSSA, Frankfurt) |
| 2% | protoniertes Polyethylenimin (MG: ca. $2 \cdot 10^5$ D), in Form einer 50%igen wässrigen Lösung (Super Floc® C 577, Firma American Cyanamid Co., New York) |
| 20% | Natriumdihydrogenphosphat |
| 1% | Isothiazolinderivat (Kathon® 886 MW, Firma Rhom und Haas, Philadelphia) |

4.
| | |
|---|---|
| 6 % | Mischung aus Cyanamid/Dicyandiamid (50/50) |
| 20 % | Calciumhydroxid |
| 20 % | Aluminiumsulfat |
| 0,5% | Polyacrylamid |
| 49 % | Bentonit |
| 2 % | Talkum |
| 2,5% | Adipinsäure |

5.
| | |
|---|---|
| 7,0% | Cyanamid |
| 3,0% | Talkum |
| 2,4% | Adipinsäure |
| 20,0% | Aluminiumsulfat |
| 50,0% | Bentonit |
| 0,6% | Polyacrylamid |
| 17,0% | Calciumoxid |

6.
| | |
|---|---|
| 43,0% | Calciumcarbonat |
| 38,0% | Natriumsulfat |
| 9,0% | Natriumcarbonat |
| 5,0% | Kaliumhydroxid |
| 5,0% | Calciumcyanamid |

7.
| | |
|---|---|
| 5,0% | Mineralöl |
| 15,0% | Natriumcarbonat |
| 12,5% | Natriumdihydrogenphosphat |
| 24,0% | Aluminiumsulfat |
| 12,5% | Natriumchlorid |
| 22,0% | Calciumcarbonat |
| 9,0% | 1-Cyanoguanidin (Dicyandiamid) |

8.
| | |
|---|---|
| 4,0% | Dicyandiamid (1-Cyanoguanidin) |
| 4,0% | Calciumcyanamid |
| 4,0% | Cyanamid |
| 5,0% | Natronwasserglas (Portil® AW) |
| 7,0% | Calciumhydroxid |
| 25,0% | Calciumoxid |
| 12,0% | Magnesiumcarbonat |
| 24,0% | Bentonit |
| 9,0% | Borsäure |
| 4,0% | 2-Phosphonobutan-1,2,4-tri-carbonsäure |
| 1,0% | Dehydran® F |
| 1,0% | Kathon® 886 MW |

**Patentansprüche**

1. Verwendung von

a) 1 bis 80 Gew.-% Cyanamid und/oder Dicyandiamid und/oder Cyanamid-Salzen

in Mitteln zur Koagulierung von Lacken, Wachsen und Beschichtungsmitteln, insbesondere zur Koagulierung von Zweikomponenten-Polyurethanlacken, die mindestens eine der nachfolgend genannten Komponenten enthalten:

b) 1 bis 95 Gew.-% Calcium- und/oder Magnesiumverbindungen,

c) 1 bis 20 Gew.-% Polyethylenimine und/oder deren protonierte oder alkylierte Derivate,

d) 1 bis 95 Gew.-% Natriumaluminiumschichtsilikate und/oder Kieselsäuren und/oder Holzmehl.

2. Verwendung nach Anspruch 1, dadurch gekennzeichnet, dass die Mittel zusätzlich eine oder mehrere der nachfolgend genannten Komponenten enthalten:

e) 1 bis 40 Gew.-% anorganische und/oder organische Säuren oder deren saure Salze,

f) 1 bis 15 Gew.-% Mischformale der allgemeinen Formel

$$R^1-O-(AO)_m-CH_2-(OB)_n-OR^2$$

und/oder Mischether der allgemeinen Formel

$$R^3-O-(AO)_p-R^4,$$

in denen die Reste $R^1$ und $R^2$ Alkylreste von Fettalkoholen mit 4 bis 16 C-Atomen, die Reste $R^3$ und $R^4$ Alkylreste von Fettalkoholen mit 4 bis 14 C-Atomen, von Ethylendiamin oder Polyglycerinen, A und B-Ethylen- oder Isopropylen-Reste, m und n ganze Zahlen von 1 bis 4 und p eine ganze Zahl von 6 bis 30 bedeuten,

g) 1 bis 30 Gew.-% Silicate und/oder Phosphate.

3. Verwendung nach Anspruch 1 oder 2, dadurch gekennzeichnet, dass man Dicyanamid und/oder Calcium-Cyanamid einsetzt.

4. Verwendung nach einem oder mehreren der Ansprüche 1 bis 3, dadurch gekennzeichnet, dass die Mittel die Komponenten a) bis g) in den folgenden Mengen enthalten:

| | |
|---|---|
| a) | 5 bis 15 Gew.-% |
| b) | 30 bis 50 Gew.-% |
| c) | 1 bis 4 Gew.-% |

| | |
|---|---|
| d) | 10 bis 30 Gew.-% |
| e) | 5 bis 25 Gew.-% |
| f) | 2 bis 5 Gew.-% |
| g) | 3 bis 10 Gew.-%. |

5. Verwendung nach einem oder mehreren der Ansprüche 1 bis 4, dadurch gekennzeichnet, dass die Mittel durch Methylierung oder Protonierung kationisch modifizierte Polyethylenimine mit Molekulargewichten im Bereich von $5\times10^4$ bis $5\times10^7$ D enthalten.

6. Verwendung nach einem oder mehreren der Ansprüche 1 bis 4, dadurch gekennzeichnet, dass die Mittel als Natriumaluminiumschichtsilikate Montmorillonit oder Bentonit enthalten.

7. Verwendung nach einem oder mehreren der Ansprüche 1 bis 6, dadurch gekennzeichnet,, dass die Mittel als Säuren Borsäure, Phosphorsäure, Citronensäure oder deren saure Salze enthalten.

8. Verwendung nach einem oder mehreren der Ansprüche 1 bis 7, dadurch gekennzeichnet, dass die Mittel zusätzlich Korrosionsinhibitoren, vorzugsweise wasserlösliche Salze von Phosphonsäuren oder Zinksalze, enthalten.

9. Verwendung nach einem oder mehreren der Ansprüche 1 bis 8, dadurch gekennzeichnet, dass die Mittel zusätzlich Biozide, vorzugsweise Formaldehyd, Isothiazoline und deren Derivate oder Pyridin-N-oxid und dessen Derivate, enthalten.

10. Verwendung nach einem oder mehreren der Ansprüche 1 bis 9, dadurch gekennzeichnet, dass die Mittel zusätzlich Antischaummittel enthalten.

## Revendications

1. Utilisation de

a) 1 à 80% en poids de cyanamide et/ou de dicyandiamide et/ou de sels de cyanamide dans des agents destinés à la coagulation de vernis, de cires et d'agents d'enduction, en particulier, à la coagulation de vernis de polyuréthanes à deux composants contenant au moins un des composants mentionnés ci-après:

b) 1 à 95% en poids de composés de calcium et/ou de magnésium,

c) 1 à 20% en poids de polyéthylène-imines et/ou de leurs dérivés protonés ou alkylés,

d) 1 à 95% en poids de silicates lamifiés de sodium/aluminium et/ou d'acides siliciques et/ou de farine de bois.

2. Utilisation selon la revendication 1, caractérisée en ce que les agents contiennent, en outre, un ou plusieurs des composants mentionnés ci-après:

e) 1 à 40% en poids d'acides inorganiques et/ou organiques ou de leurs sels acides,

f) 1 à 15% en poids de formals mixtes de formule générale:

$$R^1-O-(AO)_m-CH_2-(OB)_n-OR^2$$

et/ou d'éthers mixtes de formule générale:

$$R^3-O-(AO)_p-R^4$$

où les radicaux $R^1$ et $R^2$ représentent des radicaux alkyle d'alcools gras contenant 4 à 16 atomes de carbone, les radicaux $R^3$ et $R^4$ sont des radicaux alkyle d'alcools gras contenant 4 à 14 atomes de carbone, d'éthylène-diamine ou de polyglycérines, A et B représentent des radicaux éthylène ou isopropylène, m et n représentent des nombres entiers de 1 à 4 et p représente un nombre entier de 6 à 30,

g) 1 à 30% en poids de silicates et/ou de phosphates

3. Utilisation selon la revendication 1 ou 2, caractérisée en ce qu'on utilise du dicyanamide et/ou du cyanamide calcique.

4. Utilisation selon une ou plusieurs des revendications 1 à 3, caractérisée en ce que les agents contiennent les composants a) à g) dans les quantités suivantes:

| | |
|---|---|
| a) | 5 à 15% en poids |
| b) | 30 à 50% en poids |
| c) | 1 à 4% en poids |
| d) | 10 à 30% en poids |
| e) | 5 à 25% en poids |
| f) | 2 à 5% en poids |
| g) | 3 à 10% en poids. |

5. Utilisation selon une ou plusieurs des revendications 1 à 4, caractérisée en ce que les agents contiennent des polyéthylène-imines modifiées par voie cationique par méthylation ou protonation et ayant des poids moléculaires se situant dans l'intervalle allant de $5\times10^4$ à $5\times10^7$ D.

6. Utilisation selon une ou plusieurs des revendications 1 à 4, caractérisée en ce que les agents contiennent, comme silicates lamifiés de sodium/aluminium, de la montmorillonite ou de la bentonite.

7. Utilisation selon une ou plusieurs des revendications 1 à 6, caractérisée en ce que, comme acides, les agents contiennent de l'acide borique, de l'acide phosphorique, de l'acide citrique ou leurs sels acides.

8. Utilisation selon une ou plusieurs des revendications 1 à 7, caractérisée en ce que, en plus des inhibiteurs de corrosion, les agents contiennent, de préférence, des sels hydrosolubles d'acides phosphoniques ou de sels de zinc.

9. Utilisation selon une ou plusieurs des revendications 1 à 8, caractérisée en ce que, en plus des biocides, les agents contiennent, de préférence, du formaldéhyde, des isothiazolines et leurs dérivés ou du N-oxyde de pyridine et ses dérivés.

10. Utilisation selon une ou plusieurs des revendications 1 à 9, caractérisée en ce que les agents contiennent, en outre, des agents antimousses.

## Claims

1. The use of

a) 1 to 80% by weight cyanamide and/or dicyanodiamide and/or cyanamide salts in agents for coagulating lacquers, waxes and coating compositions, more especially for coagulating two-component polyurethane lacquers, which contain at least one of the components mentioned below:

b) 1 to 95% by weight calcium and/or magnesium compounds,

c) 1 to 20% by weight polyethylene imines and/or protonated or alkylated derivatives thereof,

d) 1 to 95% by weight sodium aluminium layer silicates and/or silicas and/or sawdust.

2. The use claimed in claim 1, characterized in that the agents additionally contain one or more of the components mentioned below:

e) 1 to 40% by weight inorganic and/or organic acids or acidic salts thereof,

f) 1 to 15% by weight mixed formals corresponding to the following general formula

$$R^1–O–(AO)_m–CH_2–(OB)_n–OR^2$$

and/or mixed ethers corresponding to the following general formula

$$R^3–O–(AO)_p–R^4,$$

in which $R^1$ and $R^2$ are alkyl radicals of fatty alcohols containing 4 to 16 carbon atoms, $R^3$ and $R^4$ are alkyl radicals of fatty alcohols containing 4 to 14 carbon atoms, of ethylenediamine or polyglycerols, A and B are ethylene or isopropylene groups, m and n are integers of 1 to 4 and p is an integer of 6 to 30,

g) 1 to 30% by weight silicates or phosphates.

3. The use claimed in claim 1 or 2, characterized in that dicyanodiamide and/or calcium cyanamide is/are used.

4. The use claimed in one or more of claims 1 to 3, characterized in that the agents contain the components in the following quantities:

| | |
|---|---|
| a) | 5 to 15% by weight |
| b) | 30 to 50% by weight |
| c) | 1 to 4% by weight |
| d) | 10 to 30% by weight |
| e) | 5 to 25% by weight |
| f) | 2 to 5% by weight |
| g) | 3 to 10% by weight. |

5. The use claimed in one or more of the claims 1 to 4, characterized in that the agents contain polyethylene imines cationically modified by methylation or protonation with molecular weights in the range from $5 \times 10^4$ to $5 \times 10^7$.

6. The use claimed in one or more of claims 1 to 4, characterized in that the agents contain montmorillonite or bentonite as sodium aluminium layer silicates.

7. The use claimed in one or more of claims 1 to 6, characterized in that the agents contain boric acid, phosphoric acid, citric acid or acidic salts thereof as acids.

8. The use claimed in one or more of claims 1 to 7, characterized in that the agents additionally contain corrosion inhibitors, preferably watersoluble salts of phosphonic acids or zinc salts.

9. The use claimed in one or more of claims 1 to 8, characterized in that the agents additionally contain biocides, preferably formaldehyde, isothiazolines and derivatives thereof or pyridine-N-oxide and derivatives thereof.

10. The use claimed in one or more of claims 1 to 9, characterized in that the agents additionally contain foam inhibitors.